# EUROPEAN PATENT SPECIFICATION

(11) **EP 1 875 572 B1**
(45) Date of publication and mention of the grant of the patent: **26.02.2014**
(21) Application number: 06728538.7
(22) Date of filing: 21.04.2006
(51) Int. Cl.: H02B 1/30

(54) **ELECTRICAL CONNECTION DEVICE BETWEEN A PANEL AND AN ELECTRICAL SWITCHBOARD**
ANSCHLUSSVORRICHTUNG ZUR ELEKTRISCHE VERBINDUNG EINES PANEELS AN EINEM ELEKTRISCHEN SCHALTFELDES
CONNEXION ELECTRIQUE ENTRE UN PANNEAU ET UN TABLEAU DE DISTRIBUTION ELECTRIQUE

(30) Priority: 29.04.2005 IT RM20050202
(43) Date of publication of application: 09.01.2008
(73) Proprietor: Bticino S.p.A., 21100 Varese (IT)
(72) Inventor: RE, Marcello, I-21040 Venegono Inferiore (Varese) (IT); PASSERA, Costantino, I-20094 Corsico (Milano) (IT)
(74) Representative: Carangelo, Pierluigi
(86) International application number: PCT/IT2006/000270
(87) International publication number: WO 2006/117816

(56) References cited:
- EP-A- 0 424 806
- DE-C1- 19 525 851
- US-A- 5 294 748
- US-A- 6 134 119
- US-B1- 6 533 605

## Description

The present invention relates to the electrical switchboards, and particularly relates to a device for electrically connecting a panel made of electrically conductive material to an electrical switchboard.

It is known that a typical electrical switchboard consists of a box-like framework defining an inner chamber for housing electrical equipment. Generally, this box-like framework comprises walls, or wall portions, that are formed by panels, such as made of sheet metal.

Generally, these panels are fixed, often in a removable manner, to a support framework of the box-like framework defining the switchboard. The support framework consists for example of a rectangular base, four stiles made of metal profiled sections fixed at their lower ends to the base and an upper cover element fixed to the upper ends of the stiles.

Alternatively, mainly with small sized switchboards, the panels forming the switchboard walls are directly joined or fixed to each other, thereby generally defining the box-like framework of the switchboard, which is thus formed without using a framework with stiles.

Typically, the panels are mechanically fixed to the switchboard box-like framework, or more simply to the switchboard, by means of fixing means of various kind, such as pins or screws, suitable to be engaged in holes of varying shapes, or innerly threaded cavities, arranged on suitable fixing strips or fixing tongues that are provided or associated to the switchboard framework.

When these panels are made of an electrically conductive material, both for safety reasons and particular regulatory provisions, a stable electrical connection is required between these panels and the remaining part of the switchboard framework. In the field, this electrical connection is typically called the "ground connection".

A known method for carrying out the ground connection of a panel to an electrical switchboard provides the use of a lead acting as a jumper between the panel and another electrically conductive part of the electrical switchboard framework and grounded. Usually, this lead is provided at opposite ends thereof with terminals to be connected by means of screws or pins to the panel and another electrically conductive part of the electrical switchboard framework, respectively. These screws or pins are such as to scratch the panel varnish layer to gain access to the electrically conductive part thereof.

The known technique for providing an electrical connection between an electrically conductive panel and an electrical switchboard as described above has a drawback in that, in accordance with this technique, for example while the switchboard is being mounted or at the end of any maintenance operation, the ground connection of the panel has to be carried out first, and then the switchboard has to be closed/closed again by mechanically fixing the panel to the switchboard. US-A- 5 294 748 already discloses a connection device for electrically connecting a panel, to be fixed to an electrical switchboard, to an electrically conductive surface of the electrical switchboard, i.e. a device according to the preamble of claim 1.

An object of the present invention is to propose a device for electrically connecting an electrically conductive panel to a switchboard framework, which facilitates the operations of mounting/dismounting the panel to/from the remaining part of the electrical switchboard as compared with the prior art as described above.

This object is achieved by means of a connection device as defined in the annexed claim 1 in the most general embodiment thereof and in the dependent claims in several particular embodiments.

A further object of the present invention is to provide an electrical switchboard such as defined in the annexed claim 9.

The invention will be better understood from the following detailed description of an embodiment thereof, which is given by way of example and thus is not to be considered limitative in any way, with reference to the annexed drawings, in which:
- Fig. 1 shows a perspective view of an electrical switchboard;
- Fig. 2 shows a perspective view of the electrical switchboard from Fig. 1 with several parts being removed;
- Fig. 3 shows a perspective view and with several parts in phantom of a particularly preferred embodiment of a connection device in accordance with the present invention;
- Fig. 4 shows a perspective view of the device from Fig. 3 as being coupled to a panel of the electrical switchboard from Fig. 1; and
- Fig. 5 is a perspective view of the device from Fig. 3 while being used for connecting a panel to the electrical switchboard from Fig. 1.

In the figures, equal or similar elements will be designated with the same numerals.

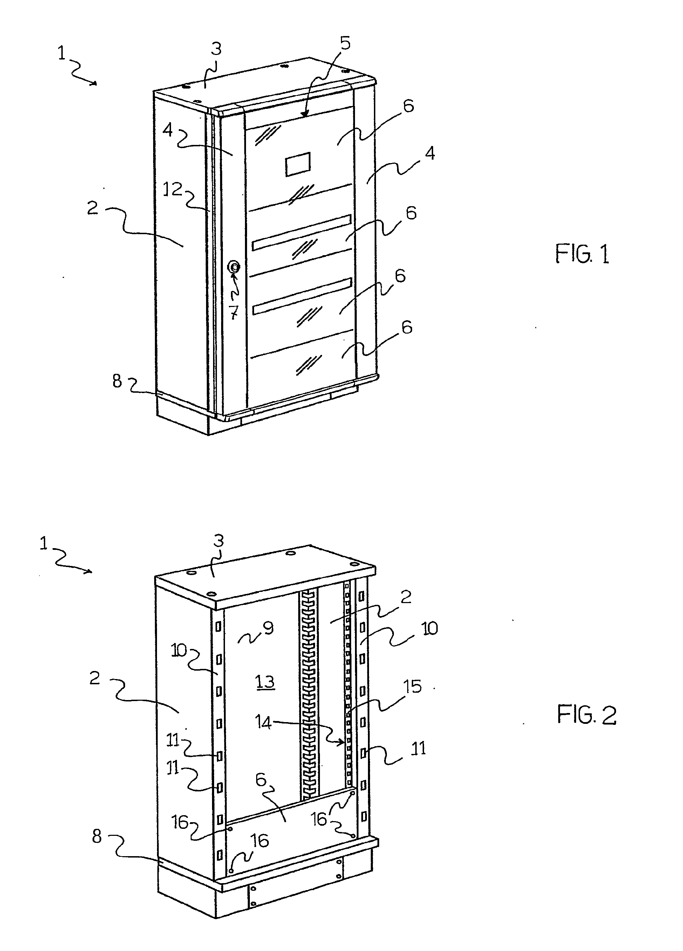

Fig. 1 illustrates a perspective view of an electrical switchboard 1. The electrical switchboard 1 essentially has a box-like framework formed by a plurality of walls, such as made of zinc-plated sheet, a side wall 2, of which a covering upper wall 3 and a base wall 8 are seen in Fig. 1.

The box-like framework of the electrical switchboard is closed on the front side thereof by a front closing door 4, which in the particular example illustrated has a portion consisting of a crystal sheet 5. The electrical switchboard 1 further comprises a plurality of panels 6 that are fixed, for example in a removable manner, to the remainder of the framework 2, 3 of the electrical switchboard 1. Preferably, similar to the remaining part of the switchboard framework, these panels 6 are also made of zinc-plated sheet. In the particular example of a switchboard from Fig. 1, any access from the outside to these panels is protected by the front door 4, which can be however opened by means of a suitable key lock 7.

In Fig. 2, the electrical switchboard 1 from Fig. 1 is shown with several components being removed, such as the door 4 and the three upper panels 6. In this figure, as compared with Fig. 1, there can be seen a further side wall 2 and a bottom wall 9 belonging to the box-like framework of the electrical switchboard 1. In this figure, the inner room 13 can be further seen, which is arranged for housing the electrical equipment to be installed within the electrical switchboard 1.

The side walls 2 of the electrical switchboard 1 have respective edges 10 folded towards the front portion of the box-like framework of the electrical switchboard 1, each of which comprises a plurality of slits 11 for fixing a front frame 12 and the closure door 4, not visible in Fig. 2 but visible in Fig. 1, to the framework of the switchboard 1.

The folded edges 10 of the switchboard side walls 2 are folded, in turn, towards the inner chamber 13 being defined by the framework of the electrical switchboard, thereby forming fixing strips 14 that have a plurality of vertically aligned holes 15 provided for fixing the panels 6 to the switchboard framework, for example by fixing means such as screws 16.

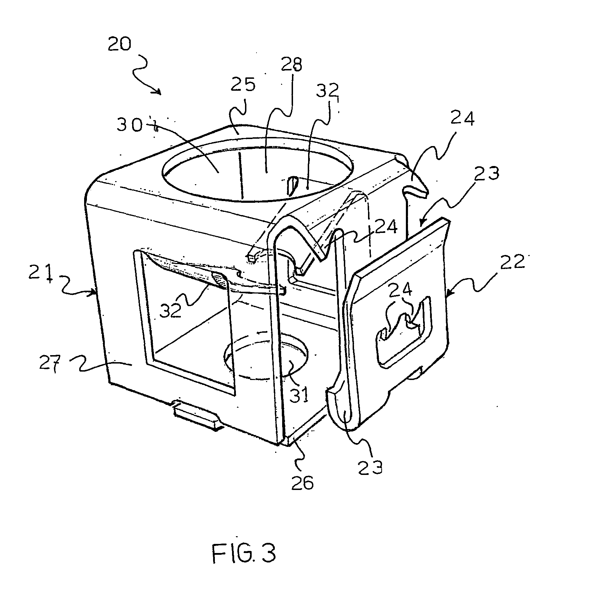

In Fig. 3 there is shown a perspective view of a particularly preferred embodiment of an electrical connection device 20, for electrically connecting the panel 6 to the remainder of the box-like framework of the electrical switchboard 1. Preferably, this device 20 allows the panel 6 to be electrically connected to a fixing strip 14 provided for mechanically fixing the panel 6 to the remainder of the framework of the electrical switchboard 1. While this fixing strip 14, in the electrical switchboard as illustrated in Fig. 1 and 2 has been shown as being made as one piece with the side walls 2 of the switchboard framework, this strip may be, for example, provided on a stile made of metal profiled section being a part of the support frame of the electrical switchboard.

The electrical connection device 20, which is made of electrically conductive metallic material and preferably made of a punched and bent sheet metal, includes a main body 21 substantially shaped as a frame or "cage". The main body 21 includes an upper wall 25 intended to abut against a wall of the panel 6, and includes a bottom wall 26 that is spaced apart from and counter-posed to the upper wall 25. The bottom wall 26 is intended to abut against an electrically conductive part of the remaining framework of the electrical switchboard 1, preferably against the fixing strip 14. Preferably, two spacing walls 27 and 28 are provided in the main body 21 of the electrical connection device 20 in order to hold the upper wall 25 and the bottom wall 26 rigidly spaced apart and substantially parallel to each other.

Advantageously, the main body 21 of the connection device 20 is such as to be capable of being clamped between the panel 6 and the fixing strip 14 of the electrical switchboard 1 when the panel 6 is fixed to the electrical switchboard 1. Particularly, while the device 20 is being clamped between the panel 6 and the electrical switchboard 1, the spacing walls 27 and 28 allow maintaining a minimum distance between the upper wall 25 and the bottom wall 26, such that they are held abutted against the panel 6 and against the fixing strip 14 of the electrical switchboard 1, respectively.

The connection device 20 further includes a projecting tab 22 being joined to the main body 21, and preferably joined to the upper wall 25 thereof. This tab 22 laterally protrudes from the main body 21 of the connection device 20. The protruding tab 22, or attachment tab, is preferably made of a sheet metal portion that is bent on itself and has walls which face and are joined to each other to define a channel 23 suitable to receive an edge portion of the panel 6 intended to be fixed and electrically connected to the electrical switchboard 1. In practice, the protruding tab 22 has a substantially U-shaped profile and can be fitted astride an edge portion of the panel 6 such as to attach the connection device 20 to the panel 6.

Preferably, the protruding tab 22 and the main body 21 of the electrical connection device 20 are formed as one piece by means of punching and bending a same metal sheet.

The protruding tab 22 comprises one or more scratching members 24, such as teeth, which consist of tips or sharp edges facing the inside of the channel 23. Preferably, these scratching members 24 are oriented towards the bottom of the channel 23. Advantageously, the scratching members 24 are arranged and shaped such as to scratch the surface of the edge portion of the panel received within the channel 23, such that a stable electrical connection is ensured between the electrical connection device 20 and the panel 6.

As shown in Fig. 3, in a particularly advantageous embodiment, the main body 21 of the connection device 20 includes a passageway for a fixing member to pass therethrough, such as a screw, which is suitable to mechanically fix the panel 6 to the fixing strip 14 of the electrical switchboard 1. Preferably, this passageway is obtained by providing a first aperture 30 in the upper wall 25 of the connection device 20 and a second counter-posed aperture 31 in the lower wall 26. In a particularly advantageous embodiment, between the first 30 and the second 31 apertures of the passageway, the main body 21 of the device 20 includes means suitable to hold the fixing member to avoid that it may be lost. Preferably, these holding means include two holding tabs 32 having a first end joined to a respective spacing wall 27, 28 and a second free end facing the inside of the framework of the main body 21. The second ends, which result facing and spaced apart with respect to each other, are such as to exert a holding action on a fixing element that passes through the main body of the connection device through the passageway 30, 31 being defined therein. Preferably, the holding tabs 32 are obtained by means of punching and bending a sheet portion forming the spacing walls 27 and 28.

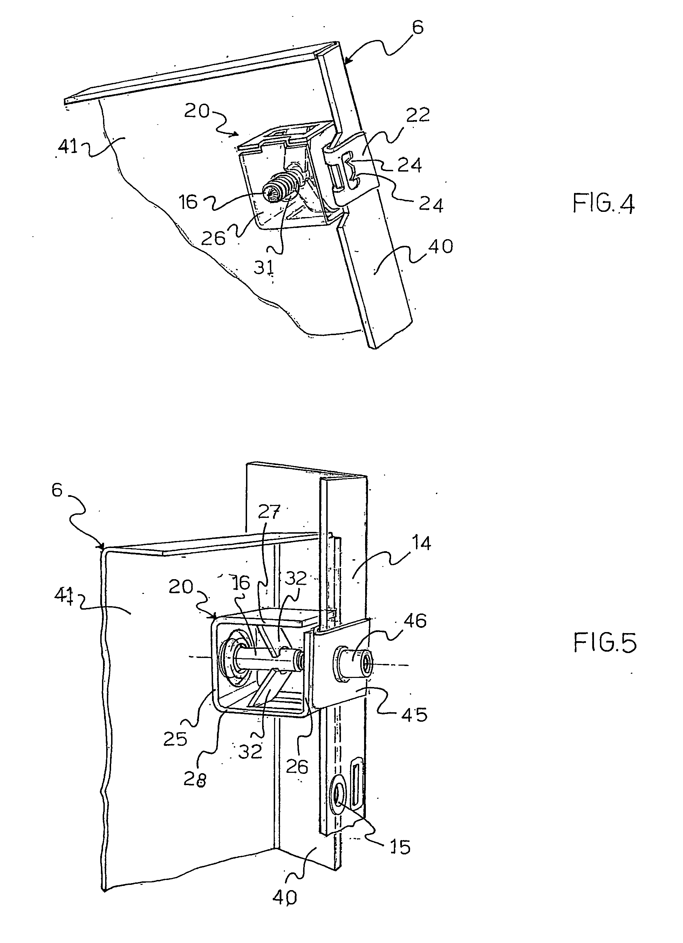

In Fig. 4, the connection device 20 from Fig. 3 is shown as being attached to a bent edge portion 40 of panel 6. A fixing member 16 in the shape of a screw passes through the passageway provided in the main body 21 of the connection device 20. This fixing member 16 also passes through, in the thickness thereof, the wall 41 of the panel 6, to be capable of removably fixing the panel 6 to the fixing strip 14 of the electric board 1. The head of this screw 16, not seen in Fig. 4, is such as to be engaged against the panel wall 41, on the opposite side relative to the installation side of the connection device 20.

In Fig. 5, the connection device 20 from Fig. 3 is shown as being clamped, by means of the screw 16, between the panel 6 and the fixing strip 14 of the electrical switchboard 1. The connection device 20 is attached to the panel 6 in the manner as represented in Fig. 4 and is electrically connected to the panel 6 due to the scratching members 24. The fixing screw 16 has a head end which engages the wall 41 of panel 6 and a tip end, threaded in this example, which engages within a hole 15 provided in the fixing strip 14. By means of the action of this screw 16, the upper wall 25 of the connection device 20 is held abutted against the wall 41 of panel 6. The pressure exerted by the panel 6 against this upper wall 25 because of the clamping action exerted by the screw 16 is transferred through the spacing walls 27, 28 to the lower wall 26 of the connection device 20. This lower wall 26 is in abutment against the fixing strip 14, and in electric contact therewith, thus allowing the electrical connection between the panel 6 and the fixing strip 14 of the electrical switchboard 1. In the particular embodiment as shown in Fig. 5, a clip accessory member 45 is attached astride the fixing strip 14. This clip member 45 is provided with a threaded seat 46 substantially aligned with a hole 15 provided on the fixing strip 14. The threaded seat 46 is such to receive a tip end of the fixing screw 16. Due to the provision of this clip 45, the lower wall 26 of the connection device 20 is not directly abutted against the fixing strip 14, but interferes with a wall of this clip 45. Of course, an embodiment may be provided in which the clip 45 is omitted and the connection device 20 has a wall 26 directly in abutment against the fixing strip 14.

As may be easily understood from what has been discussed above, the objects of the invention are fully achieved. In fact, in an electrical switchboard using the connection device according to the invention, a panel 6 can be electrically connected to the remainder of the switchboard framework in an easy, smooth and quick manner. It should be observed that, by means of a connection device in accordance with the present invention, the operations of electrically connecting the panel to the switchboard are carried out, in practice, simultaneously to the operations of mechanically fixing the panel to the remainder of the switchboard framework.

While only one embodiment of the invention has been illustrated and described herein, it should be understood that a number of modifications and variations are feasible within the scope of the same inventive concept. For example, scratching members may be provided (e.g. protruding brads) also on the connection device wall 26 intended to abut against the fixing strip 14, which are such as to penetrate the latter, at least partially, in order to establish an improved electrical connection between the connection device and the fixing strip.

## Claims

1. A connection device (20) for electrically connecting a panel (6), to be fixed to an electrical switchboard (1), to an electrically conductive surface (14) of the same electrical switchboard (1), the connection device (20) being fastenable between a wall (41) of the panel (6) and the electrically conductive surface (14), the device (20) comprising a main body (21) having a first wall (25) adapted to be faced in abutment against said wall (41) of the panel (6) and having a second wall (26) facing said first wall and spaced away from said first wall (25) and that is adapted to be faced in abutment against said surface (14) of the switchboard for electrically contacting this surface, the device (20) further including a tab (22) joined to said main body (21), the tab (22) being an attachment tab and including walls which face and are joined to each other to define a channel (23) adapted to receive said edge portion for attaching said connection device (20) to said panel (6),
**characterized in that**:
- the tab includes scratching means (24) for scratching an edge portion of the panel (6); and
- the main body (21) includes a passageway for a fixing member (16) to pass therethrough, for mechanically fixing said panel (6) to said electrical switchboard (1).

2. The connection device (20) according to claim 1, wherein said channel (23) is substantially U-shaped.

3. The connection device (20) according to claim 1, wherein said connection device (20) is formed as one piece from a punched and bent metal sheet.

4. The connection device (20) according to claim 1, wherein said main body further includes two spacing walls (27, 28) for holding a minimum distance between said first (25) and said second (26) walls.

5. The connection device (20) according to claim 1, wherein said means for scratching (24) include tips or sharp edges facing the inside of said channel (23).

6. The connection device (20) according to claim 1, wherein said main body (21) includes means (32) for holding said fixing member (16) for avoiding that it may be lost.

7. The connection device (20) according to claim 6, wherein said holding means include two counter-posed tabs (32) having a respective end joined to opposite walls of said main body (21).

8. The connection device (20) according to claim 1, wherein said conductive surface (14) of said electrical switchboard is a fixing strip (14), including holes (15) for mechanically fixing said panel (6) to said switchboard (1).

9. An electrical switchboard (1) comprising at least one panel (6) and at least one connection device (20) according to any preceding claim for electrically connecting said panel (6) to said electrical switchboard (1).

## Patentansprüche

1. Eine Verbindungsvorrichtung (20) zum elektrischen Verbinden eines Felds (6), das an einer elektrischen Schalttafel (1) befestigt werden soll, mit einer elektrisch leitfähigen Oberfläche (14) dieser elektrischen Schalttafel (1), wobei die Verbindungsvorrichtung (20) zwischen einer Wand (41) des Felds (6) und der elektrisch leitfähigen Oberfläche (14) anbringbar ist, wobei die Vorrichtung (20) einen Hauptkörper (21) mit einer ersten Wand (25), die angepasst ist, um der Wand (41) des Felds (6) mit Anstoßen an dieselbe zugewandt zu sein, und einer zweiten Wand (26), die der ersten Wand zugewandt und von dieser ersten Wand (25) beabstandet ist, und die angepasst ist, um der Oberfläche (14) der Schalttafel zum elektrischen Verbinden dieser Oberfläche mit Anstoßen an dieselbe zugewandt zu sein, aufweist, wobei die Vorrichtung (20) ferner einen Vorsprung (22) umfasst, der mit dem Hauptkörper (21) verbunden ist, wobei der Vorsprung (22) ein Befestigungsvorsprung ist und Wände umfasst, die einander zugewandt und miteinander verbunden sind, um einen Kanal (23) zu definieren, der angepasst ist, um den Randabschnitt zum Befestigen der Verbindungsvorrichtung (20) an dem Feld (6) aufzunehmen,
**dadurch gekennzeichnet, dass**:
der Vorsprung eine Kratzeinrichtung (24) zum Kratzen an einem Randabschnitt des Felds (6) umfasst; und
der Hauptkörper (21) einen Durchgang, durch den ein Befestigungsbauteil (16) hindurchlaufen kann, zum mechanischen Befestigen des Felds (6) an der elektrischen Schalttafel (1) umfasst.

2. Die Verbindungsvorrichtung (20) gemäß Anspruch 1, bei der der Kanal (23) im Wesentlichen U-förmig ist.

3. Die Verbindungsvorrichtung (20) gemäß Anspruch 1, wobei die Verbindungsvorrichtung (20) als ein Stück aus einem gestanzten und gebogenen Blech gebildet ist.

4. Die Verbindungsvorrichtung (20) gemäß Anspruch 1, bei der der Hauptkörper ferner zwei Beabstandungswände (27, 28) zum Halten einer minimalen Entfernung zwischen der ersten (25) und der zweiten (26) Wand umfasst.

5. Die Verbindungsvorrichtung (20) gemäß Anspruch 1, bei der die Einrichtung zum Kratzen (24) Spitzen oder scharfe Kanten, die der Innenseite des Kanals (23) zugewandt sind, umfasst.

6. Die Verbindungsvorrichtung (20) gemäß Anspruch 1, bei der der Hauptkörper (21) eine Einrichtung (32) zum Halten des Befestigungsbauteils (16), um ein Verlieren desselben zu vermeiden, umfasst.

7. Die Verbindungsvorrichtung (20) gemäß Anspruch 6, bei der die Halteeinrichtung zwei entgegengesetzt angeordnete Vorsprünge (32) mit einem jeweiligen Ende, das mit gegenüberliegenden Wänden des Hauptkörpers (21) verbunden ist, umfasst.

8. Die Verbindungsvorrichtung (20) gemäß Anspruch 1, bei der die leitfähige Oberfläche (14) der elektrischen Schalttafel ein Befestigungsstreifen (14) ist, der Löcher (15) zum mechanischen Befestigen des Felds (6) an der Schalttafel (1) umfasst.

9. Eine elektrische Schalttafel (1) mit zumindest einem Feld (6) und zumindest einer Verbindungsvorrichtung (20) gemäß einem der vorherigen Ansprüche zum elektrischen Verbinden des Felds (6) mit der elektrischen Schalttafel (1).

## Revendications

1. Dispositif de connexion (20) pour connecter électriquement un panneau (6), destiné à être fixé à un tableau de distribution électrique (1), à une surface électriquement conductrice (14) de ce même tableau de distribution électrique (1), le dispositif de connexion (20) pouvant être fixé entre une paroi (41) du panneau (6) et la surface électriquement conductrice (14), le dispositif (20) comprenant un corps principal (21) comportant une première paroi (25) adaptée à faire face en butée contre ladite paroi (41) du panneau (6) et comportant une deuxième paroi (26) faisant face à ladite première paroi et espacée vis-à-vis de ladite première paroi (25), et adaptée à faire face en butée contre ladite surface (14) du tableau de distribution de façon à venir en contact électrique avec cette surface, le dispositif (20) comprenant de plus une patte (22) réunie audit corps principal (21), la patte (22) étant une patte de fixation et comprenant des parois qui se font mutuellement face et qui sont réunies les unes aux autres de façon à définir un canal (23) adapté de façon à recevoir ladite partie de bord afin de fixer ledit dispositif de connexion (20) audit panneau (6),
**caractérisé en ce que** :
- la patte comprend des moyens de grattement (24) pour gratter une partie de bord du panneau (6) ; et
- le corps principal (21) comprend un passage pour qu'un élément de fixation (16) passe à travers celui-ci, de façon à fixer mécaniquement ledit panneau (6) audit tableau de distribution électrique (1).

2. Dispositif de connexion (20) selon la revendication 1, dans lequel ledit canal (23) est sensiblement en forme de U.

3. Dispositif de connexion (20) selon la revendication 1, dans lequel ledit dispositif de connexion (20) est formé d'un seul tenant à partir d'une feuille de métal matricée et incurvée.

4. Dispositif de connexion (20) selon la revendication 1, dans lequel ledit corps principal comprend de plus deux parois d'espacement (27, 28) pour maintenir une distance minimale entre ladite première (25) et ladite deuxième (26) paroi.

5. Dispositif de connexion (20) selon la revendication 1, dans lequel lesdits moyens pour le grattement (24) comprennent des pointes ou des bords aigus faisant face à l'intérieur dudit canal (23).

6. Dispositif de connexion (20) selon la revendication 1, dans lequel ledit corps principal (21) comprend des moyens (32) pour maintenir ledit élément de fixation (16) de façon à éviter qu'il puisse être perdu.

7. Dispositif de connexion (20) selon la revendication 6, dans lequel lesdits moyens de maintien comprennent deux pattes posées en opposition (32) comportant une extrémité respective réunie à des parois opposées dudit corps principal (21).

8. Dispositif de connexion (20) selon la revendication 1, dans lequel ladite surface conductrice (14) dudit tableau de distribution électrique est une bande de fixation (14), comprenant des trous (15) pour fixer mécaniquement ledit panneau (6) audit tableau de distribution (1).

9. Tableau de distribution électrique (1) comprenant au moins un panneau (6) et au moins un dispositif de connexion (20) selon l'une quelconque des revendications précédentes pour connecter électriquement ledit panneau (6) audit tableau de distribution électrique (1).
